Europäisches Patentamt

European Patent Office

Office européen des brevets

(19)

(11) Numéro de publication : **0 086 160 B1**

(12) **FASCICULE DE BREVET EUROPÉEN**

(45) Date de publication du fascicule du brevet :
06.05.87

(51) Int. Cl.⁴ : **G 01 N 35/00**

(21) Numéro de dépôt : **83400266.9**

(22) Date de dépôt : **08.02.83**

(54) **Appareil automatisé pour la réalisation de dosages biologiques, biochimiques ou physico-chimiques.**

(30) Priorité : **09.02.82 FR 8202058**

(43) Date de publication de la demande :
**17.08.83 Bulletin 83/33**

(45) Mention de la délivrance du brevet : ·
**06.05.87 Bulletin 87/19**

(84) Etats contractants désignés :
**AT BE CH DE FR GB IT LI LU NL SE**

(56) Documents cités :
**FR-A- 2 084 155**
**FR-A- 2 388 265**
**GB-A- 1 119 197**
**US-A- 3 772 154**
**US-A- 3 983 006**
**US-A- 4 140 018**
**US-A- 4 158 545**
**US-A- 4 168 294**

(73) Titulaire : **RHONE-POULENC S.A.**
**25, quai Paul Doumer**
**F-92408 Courbevoie (FR)**

(72) Inventeur : **Lissot, Jean**
**5, Place du Val Clos**
**F-77170 Brie-Comte-Robert (FR)**
Inventeur : **Pascal, Claude**
**24, rue de Moissy**
**F-77380 Combs la Ville (FR)**
Inventeur : **Thomas, Jean-Pierre**
**17, rue Cujas**
**F-94400 Vitry S/Seine (FR)**
Inventeur : **Vasseur, Jean-Pierre**
**19, Square Maurice Ravel**
**F-91160 Longjumeau (FR)**

(74) Mandataire : **Pilard, Jacques et al**
**RHONE-POULENC RECHERCHES Service Brevets**
**Pharma 25, Quai Paul Doumer**
**F-92408 Courbevoie Cedex (FR)**

Jouve, 18, rue St-Denis, 75001 Paris, France

# 0 086 160

**Description**

La présente invention concerne un appareil automatisé permettant la réalisation de dosages biologiques, biochimiques ou physico-chimiques et plus particulièrement de dosages microbiologiques selon la méthode turbidimétrique.

Un antibiotique possède une activité inhibitrice vis-à-vis des microorganismes vivants et cette propriété peut être mise à profit pour sa détection et son dosage au cours des différentes phases de sa fabrication et de son exploitation.

Les méthodes classiquement utilisées pour les dosages microbiologiques sont la méthode dite de « dilution », la méthode de diffusion et la méthode turbidimétrique.

La méthode de « dilution », bien que peu précise, est suffisante pour déterminer un spectre d'activité ou la sensibilité d'un germe à tel ou tel antibiotique. Des solutions ont été apportées qui permettent une utilisation courante et rapide de cette méthode dans les hôpitaux ou les laboratoires d'analyses médicales.

La méthode de diffusion, par son principe, est difficile à automatiser. Cette méthode consiste à placer à la surface de plaques de milieu nutritif gélosé et ensemencé, en général dans des boîtes de Pétri, des solutions de concentrations croissantes d'antibiotiques, de raison 1,5 ou 2. Après incubation il apparaît des zones d'inhibition circulaires dont le diamètre est en relation linéaire avec le logarithme des concentrations. Le dosage est réalisé par comparaison des réponses obtenues pour l'échantillon avec celles de l'étalon.

La méthode turbidimétrique consiste à préparer des séries de solutions de concentrations croissantes d'antibiotiques ou de facteurs de croissance, de raison donnée, dans un milieu nutritif ensemencé par le microorganisme approprié et à évaluer, après un temps d'incubation déterminé à une température constante, la turbidité produite par l'ensemble des corps microbiens.

La turbidité évolue en fonction inverse de la concentration en antibiotique ; ceci se traduit par une courbe en S qui ne correspond pas à une formule mathématique simple. Par cette méthode, il est possible de définir l'unité d'activité d'un antibiotique ou de comparer quantitativement l'activité d'un antibiotique à celle d'un étalon.

La méthode de dosage turbidimétrique nécessite la réalisation de 3 phases automatisées ou non qui peuvent se résumer de la manière suivante :

a) préparation dans une série de tubes à essai d'un volume constant (par exemple 1 $cm^3$) de solutions de concentrations croissantes, de raison variable selon le type d'antibiotique (généralement de 1,1 à 1,5), de l'échantillon à étudier et du produit de référence et addition dans chaque tube d'un volume constant de milieu nutritif ensemencé (par exemple 9 $cm^3$),

b) incubation des tubes dans des bains thermostatiques dont la température est généralement fixée à 37 °C,

c) mesure photométrique à la longueur d'onde convenable de la turbidité après une phase intermédiaire de transfert de tout ou partie des échantillons dans la ou les cuves du photomètre.

Les appareils qui existent actuellement manquent de souplesse et sont seulement adaptés à certains cas bien précis. Par ailleurs, ils ne sont que partiellement automatisés.

Ainsi, dans le brevet anglais GB 1 119 197 est décrit un appareil qui permet de réaliser sur un lot d'échantillons des opérations successives de dilution, de prélèvement ou d'addition de réactif.

Dans le brevet français FR 2 084 155 est décrit un appareil d'analyse comprenant un dispositif destiné à distribuer successivement des spécimens biologiques séparés à des récipients successifs, un dispositif destiné à diluer les échantillons, un dispositif destiné à transférer un échantillon dilué à un récipient d'incubation, un dispositif d'incubation et un dispositif d'analyse.

Dans le brevet américain US 3 983 006 est décrite une méthode de détermination de la concentration minimale inhibitrice d'un antibiotique par mesure continue de la variation des propriétés optiques d'une suspension bactérienne en présence ou non d'un antibiotique au moyen d'un analyseur automatique.

Bien que ces différents appareils nécessitent l'utilisation de translateurs, de diluteurs ou de pompes à piston, ils permettent seulement la préparation d'échantillons dans un ordre séquentiel et ils ne peuvent pas être adaptés à la réalisation de blocs homogènes dans lesquels toutes les dilutions de l'échantillon et de l'étalon sont effectuées simultanément.

Il a maintenant été trouvé, et c'est ce qui fait l'objet de la présente invention, que différentes phases de la méthode de dosage turbidimétrique peuvent être automatisées. De cette manière, il est possible de réduire les causes d'erreurs en éliminant en particulier les manipulations et en traitant simultanément en une seule opération les différentes solutions de l'échantillon et du produit de référence, maîtrisant ainsi le synchronisme de la culture microbienne dans l'unité de dosage.

L'appareil selon l'invention est défini par la revendication 1. En utilisant l'appareil selon l'invention, il est possible de comparer directement l'activité d'un échantillon à celle d'un produit étalon ou de déterminer l'activité d'un antibiotique par évaluation de la concentration diminuant de 50 % la croissance du microorganisme. Une unité de dosage est constituée, par exemple, de 24 tubes et elle reste immuable depuis la phase de préparation jusqu'à la phase de mesure photométrique.

Lorsque l'unité de dosage est utilisée pour contrôler un échantillon, c'est-à-dire pour comparer

2

l'activité d'un échantillon à celle d'un produit étalon, il est nécessaire de répartir dans les tubes :

une gamme de, par exemple, 4 concentrations de raison convenablement choisie (1,1 à 1,5) de l'échantillon, à partir d'une solution unique,

une gamme de, par exemple, 4 concentrations de raison identique du produit étalon

et, pour diminuer les causes d'erreurs, en particulier dues au caractère aléatoire de la multiplication microbienne, de répéter chaque gamme de concentration un certain nombre de fois, par exemple 3 ; les tubes étant disposés au hasard pour permettre l'analyse statistique ultérieure des résultats (randomisation).

Chaque solution est préparée à volume constant en ajoutant à chaque prélèvement une quantité déterminée de diluant, par exemple de l'eau distillée, de façon que chaque tube contienne le même volume de solution (par exemple 0,3 cm³).

Enfin, chaque tube sera complété par l'addition d'un même volume de liquide nutritif ensemencé (par exemple 2,7 cm³).

Lorsque l'unité de dosage est utilisée pour déterminer le titre d'un échantillon dont l'activité est inconnue, il est nécessaire de préparer une gamme de concentrations plus étendue :

— 1 gamme de 7 concentrations avec un témoin sans antibiotique, chaque gamme de concentrations pouvant être répétée 3 fois. Cependant la précision n'étant pas nécessairement recherchée dans ce cas, il n'est pas obligatoire d'effectuer une répétition de chaque concentration et il est alors possible de déterminer simultanément l'activité de trois produits différents.

L'unité de dosage peut être préparée automatiquement à l'aide d'un automate qui est constitué par la combinaison de 8 diluteurs et d'un translateur.

L'automate de préparation doit réaliser les fonctions suivantes :

— prélèvement de volumes croissants d'une solution de l'antibiotique selon une raison convenablement choisie

— prélèvement d'un volume déterminé complémentaire de diluant tel que, par exemple, le volume total de la solution d'antibiotique et du diluant soit de 0,3 cm³

— prélèvement d'un volume déterminé, par exemple 2,7 cm³, de milieu nutritif ensemencé maintenu à une température voisine de + 4 °C

— distribution des différents volumes dans les tubes à essais

— randomisation de la distribution

— mémorisation de l'ensemble des données ci-dessus.

Toutes les fonctions de prélèvement et de distribution sont réalisées par 8 diluteurs et les autres fonctions sont réalisées par le translateur, qui comprend en outre le sélecteur d'aiguilles mettant celles-ci en position de prélèvement ou non.

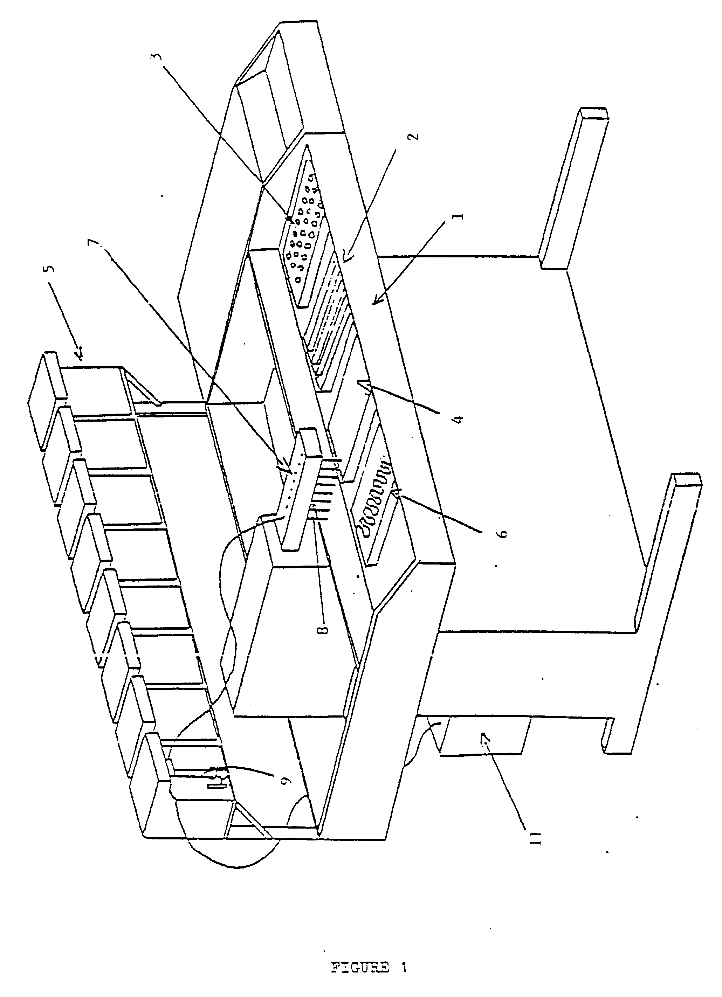

La figure 1 représente le schéma de l'automate de préparation.

L'automate de préparation comprend une table horizontale (1) sur laquelle se trouvent, parfaitement positionnés, une barquette comportant des augets (2) parallèles (généralement 4) qui peuvent contenir les solutions (12) de l'antibiotique à doser, des solutions étalon (14) et un diluant (18), un portoir (3) contenant des tubes à essais (généralement 24), un poste de lavage (4) et un poste d'essuyage (6) des aiguilles (8) de prélèvement.

L'automate de préparation peut comporter 2 postes de travail symétriques, l'un à droite tel que représenté sur la figure 1, l'autre à gauche à proximité des postes de lavage (4) et d'essuyage (6) et comportant comme le premier une barquette contenant des augets (2) et un portoir (3) contenant des tubes à essais.

Au-dessus de la table (1) se trouve le sélecteur (7) des aiguilles (8) de prélèvement qui est constitué d'une tête de support des aiguilles, solidaire d'un chariot mobile qui peut se déplacer dans un plan horizontal et dans un plan vertical au moyen de 2 moteurs pas à pas pilotés par un microprocesseur (17), chaque aiguille (8) étant par ailleurs solidaire d'un électro-aimant commandé par l'ordinateur (18).

Les aiguilles (8), généralement au nombre de 8, situées dans un plan vertical parallèle aux axes des augets (2) de la barquette, sont reliées aux diluteurs (5) qui seront décrits ci-après.

Les aiguilles (8) sont normalement en position basse et peuvent dans cette position effectuer un prélèvement de la solution (12) d'antibiotique à doser, ou de diluant (13) ou de solution étalon (14). L'excitation de l'électro-aimant permet de relever l'aiguille (8) correspondante d'une hauteur de 10 mm environ. Dans la position haute, cette aiguille (8) ne plonge plus dans les augets (2) contenant la solution (12) à doser ou le diluant (13) ou la solution étalon (14). De cette manière est évité tout risque de prélèvement aberrant, de pollution interne par diffusion ou de pollution externe par passage d'une solution d'un antibiotique à un autre.

La randomisation, c'est-à-dire la répartition aléatoire des différentes solutions dans les tubes à essais du portoir (3) est calculée et mémorisée par l'ordinateur (18) qui rétablira l'ordre cohérent des produits et des concentrations avant l'exploitation des résultats par calcul statistique.

Chaque diluteur (5) est composé d'une pompe (9) constituée d'une seringue de précision de 5 cm³ dont l'extrémité est reliée à une vanne (10) à 3 voies permettant de mettre la pompe (9) en communication soit avec les solutions (12) à doser ou les solutions étalon (14) ou le diluant (13) soit avec un milieu nutritif (11). Le déplacement du piston de la pompe (9) et l'ouverture de la vanne (10) sont assurés par des moteurs pas à pas (15, 16) pilotés par un microprocesseur (17). Une des voies de la vanne (10) est reliée à la source de milieu nutritif (11) maintenu à une température de 4 °C, l'autre est reliée à une aiguille (8) de prélèvement de la solution (12) à doser, de la solution étalon (14) ou du diluant (13) au moyen d'un tube souple (19) de longueur appropriée. Un tel dispositif permet à la seringue d'effectuer tout prélèvement et toute distribution dans la direction choisie.

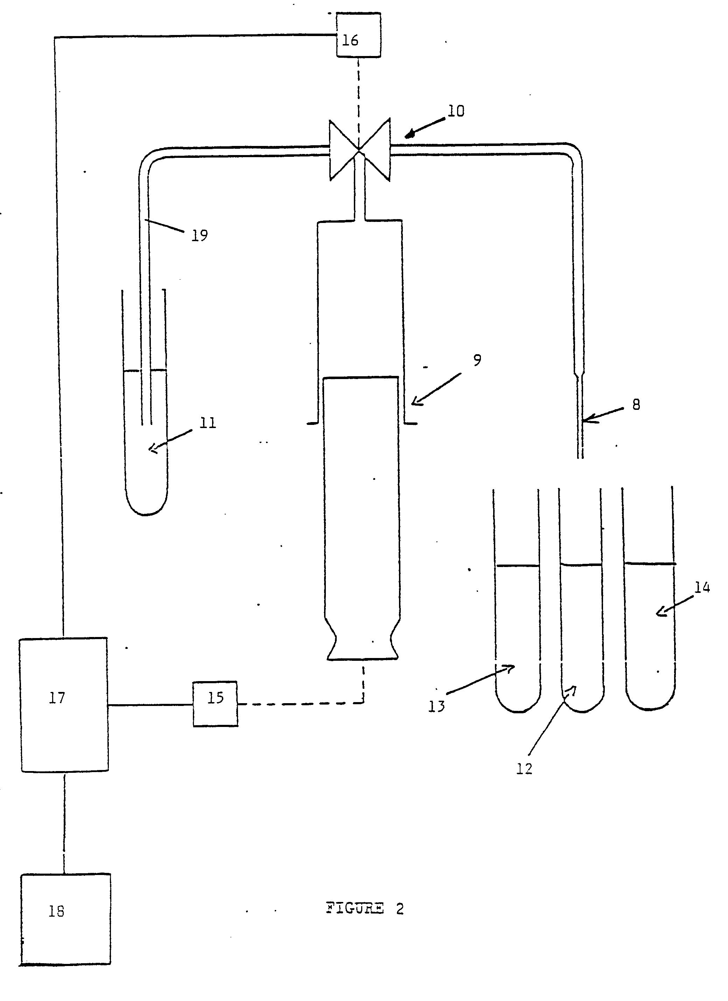

La figure 2 donne le schéma de fonctionnement du diluteur. La tubulure (19) étant pleine de milieu nutritif (11), on effectue les prélèvements successifs de la solution (12) d'antibiotique à doser et de diluant (13). Après inversion de la vanne (10), on prélève un volume constant de milieu nutritif (11). Après positionnement de la vanne (10) dans la position initiale, la totalité des prélèvements est refoulée dans le tube à essai de l'unité de dosage, l'unité de dosage étant constituée par l'ensemble des tubes à essais du portoir.

Pour éviter les mélanges par diffusion lors des prélèvements successifs, une bulle d'air d'un volume de 5 à 10 µl est introduite pour séparer un prélèvement du suivant. De plus une bulle d'air est introduite à l'extrémité de l'aiguille (8) de façon à éliminer la formation, à son extrémité, de gouttelettes qui risqueraient d'être projetées lors des déplacements de la tête-support des aiguilles (8) du sélecteur (7).

Tableau I

| n° d'instruction | Translateur (support des aiguilles) | Diluteurs | Electro-aimant sélecteur d' aiguille |
|---|---|---|---|
| 10 | Remise à zéro | | |
| 20 | Essuyage des aiguilles (8) dans le poste d'essuyage(6) | | |
| 30 | | Prélèvement d'une bulle d'air dans tous les diluteurs(5) | |
| 40 | Déplacement horizontal de la tête support des aiguil- les au-dessus de l'auget "étalon"(14) | | |
| 50 | | | Excitation : sélecteur d' aiguilles en position haute (aiguilles pour prélèvement d' échantillon(12) |
| 60 | Déplacement verti- cal descendant de la tête de support des aiguilles | | |

4

0 086 160

(Suite)

| n° d'instruction | Translateur | Diluteurs | Electro-aimant sélecteur d'aiguille |
|---|---|---|---|
| 70 | | Prélèvements de l'étalon (14) par les diluteurs sélectionnés | |
| 80 | Déplacement vertical ascendant de la tête de support des aiguilles | | |
| 90 | | | Coupure de l'excitation: aiguilles(8) en position basse |
| 100 | Déplacement horizontal de la tête de support des aiguilles au-dessus de l'auget (2) "échantillon" (14) | | |
| 110 | | | Excitation : sélecteur d'aiguilles en position haute (aiguilles (8) ayant prélevé l'étalon) |
| 120 | Déplacement vertical descendant de la tête support des aiguilles | | |
| 130 | | Prélèvement des échantillons(12) par les diluteurs sélectionnés | |
| 140 | Déplacement vertical ascendant de la tête support des aiguilles | | |
| 150 | | | Coupure de l'excitation: toutes les aiguilles (8) en position basse |

5

(Suite)

| n° d'instruction | Translateur | Diluteurs | Electro-aimant sélecteur d'aiguille |
|---|---|---|---|
| 160 | | Prélèvement d'une bulle d'air dans tous les diluteurs | |
| 170 | Déplacement horizontal de la tête de support des aiguilles au-dessus de l'auget (2) "diluant" (19) | | |
| 180 | Déplacement vertical descendant de la tête support des aiguilles | | |
| 190 | | Prélèvement de diluant (13) par tous les diluteurs (5) | |
| 200 | Déplacement vertical ascendant de la tête support des aiguilles | | |
| 210 | | Prélèvement d'une bulle d'air | |
| 220 | Déplacement horizontal de la tête support au-dessus de l'unité de dosage | | |
| 230 | | Positionnement de la vanne (10) | |
| 240 | | Prélèvement du liquide nutritif (11) par les diluteurs (5) | |
| 250 | | Repositionnement de la vanne de chaque diluteur (5) | |
| 260 | Déplacement vertical descendant de la tête support des aiguilles | | |
| 270 | | Distribution dans les tubes à essais du portoir | |
| 280 | Déplacement vertical ascendant de la tête support des aiguilles | | |
| 290 | vers instruction n° 20 | | |

L'unité de dosage ainsi préparée est placée dans un incubateur équipé d'un chauffage à sec thermostaté (dont la température est préalablement fixée) pendant un temps prédéterminé.

L'incubation étant terminée, la croissance du microorganisme est arrêtée par addition d'une goutte de formol. L'unité de dosage est placée dans le réceptacle d'un photomètre automatique qui permet la mesure directe de la densité optique des solutions étudiées ; les parois du portoir étant munies, au niveau de chaque tube, de fenêtres laissant passer le faisceau de la source lumineuse jusqu'à la cellule photoélectrique.

Par exemple, le photomètre, qui peut être un appareil commercialisé, est un analyseur à 24 canaux photométriques individuels. La lumière d'une lampe au xénon est conduite par 24 fibres optiques en quartz vers les 24 cuvettes de mesure. Cependant, il existe entre les 24 faisceaux lumineux une distorsion de la mesure turbidimétrique qu'il est nécessaire de corriger.

Le relevé de valeurs expérimentales obtenues pour différents microorganismes et différents niveaux de turbidité permet de calculer un facteur de correction pour chaque canal optique. Tous ces facteurs de correction sont mémorisés grâce à un programme ordinateur.

Les données expérimentales transférées et corrigées sur l'ordinateur sont exploitées selon les programmes statistiques classiques ; les résultats sont exprimés sur une imprimante sous forme d'un tableau et d'une courbe de régression.

Plus particulièrement, l'ordinateur a pour fonction :

— de gérer l'automate de préparation selon une séquence d'instructions telle que celle décrite dans le tableau I ci-dessus concernant le translateur, les diluteurs et le sélecteur d'aiguilles
— d'assurer la randomisation des prélèvements
— de mémoriser les fonctions précédentes et l'identification de l'unité de dosage
— d'acquérir les mesures photométriques
— d'effectuer les corrections de ces mesures et leur analyse statistique
— d'éditer et d'archiver les résultats.

De plus l'ordinateur permet d'adapter cet ensemble de fonctions et de programmes au type de dosage choisi et à l'évolution de la procédure dudit dosage.

L'appareil, objet de la présente invention, peut être utilisé non seulement pour le dosage microbiologique par turbidimétrie, mais aussi pour tous les dosages qui nécessitent la préparation de solutions de concentration variable selon une disposition pouvant être randomisée avec ou sans répétition ou qui nécessitent l'apport de réactifs différents en proportions variables et programmables et qui mettent en jeu des réactions enzymatiques, immunologiques, sérologiques, chimiques ou biochimiques.

### Revendications

1. Appareil automatisé pour la réalisation de dosages microbiologiques de solutions (12) par turbidimétrie, ledit appareil comportant :

un incubateur à sec et un appareil de mesure de la turbidité reliés à un ordinateur (18) unique assurant l'acquisition des données, la mémorisation des conditions de préparation desdites solutions (12) ainsi que l'interprétation statistique des résultats de mesure,

un automate de préparation de ces solutions (12) et dont la gestion est effectuée par ledit ordinateur (18), ledit automate comportant lui-même :

a) une table (1) horizontale supportant des augets (2) présentant un axe longitudinal et contenant les solutions (12) à doser, des solutions étalon (14) et un diluant (13), un portoir (3) contenant un nombre prédéterminé de tubes à essais, un poste de lavage (4) ainsi qu'un poste d'essuyage (6) d'aiguilles (8) de prélèvement,

b) un ensemble de diluteurs (5), chacun d'eux étant constitué d'une pompe (9) à piston, la sortie de cette pompe étant reliée à l'une des voies d'une vanne (10) à trois voies, les deux autres voies communiquant l'une avec une source de milieu nutritif (11), l'autre par l'intermédiaire d'une aiguille (8) avec la solution (12) à doser, le diluant (13) ou une solution étalon (14) devant être prélevés,

c) un sélecteur (7) d'aiguilles (8) situé au-dessus dudit automate et se déplaçant par translation dans un plan horizontal, les aiguilles (8) étant disposées dans un plan vertical parallèle à l'axe longitudinal des augets (2), chaque aiguille (8) étant mobile verticalement par excitation d'un électro-aimant solidaire de cette aiguille (8), lors de sa sélection en vue d'effectuer ledit prélèvement,

d) des moyens pour prélever, grâce à chaque aiguille (8) une quantité différente pour chaque aiguille (8) de la solution (12) à doser, de la solution étalon (14) ou du diluant (13) ainsi que pour prélever, après commande de ladite vanne (10) un volume constant de milieu nutritif (11) et pour refouler dans un tube à essai la totalité des prélèvements relatifs à une aiguille (8),

e) des moyens pour réaliser de manière aléatoire la distribution des solutions à doser (12) et des solutions étalon (14) dans les tubes à essai du portoir (3).

2. Utilisation d'un automate de préparation selon la revendication 1 pour la préparation de solutions d'antibiotiques ou de facteurs de croissance destinées à des dosages microbiologiques par turbidimétrie.

3. Utilisation d'un automate de préparation selon la revendication 1 pour la préparation de mélanges dans des proportions variables et programmables de différents réactifs et/ou de solutions pour la réalisation de dosages enzymatiques, chimiques, biochimiques, immunologiques ou sérologiques.

## Claims

1. Automated apparatus for carrying out microbiological assays of solutions (12) by turbidimetry, the said apparatus comprising :

a dry incubator and an apparatus for measuring turbidity, both connected to a single computer (18) which provides for data acquisition, the memorization of conditions of preparation of the said solutions (12) and also the statistical interpretation of the results of measurement,

an automated device for preparing these solutions (12), the control of which device is performed by the said computer (18) and the said automatic device itself containing :

a) a horizontal table (1) supporting troughs (2) which possess a longitudinal axis and contain the solutions (12) to be assayed, standard solutions (14) and a diluent (13), a holder (3) containing a predetermined number of test tubes, a washing unit (4) and also a wiping unit (6) for sample-withdrawal needles (8),

b) an assembly of diluters (5), each of which consists of a piston pump (9), the outflow from this pump being connected to one of the channels of a three-way valve (10), the other two channels communicating, one with a source of nutrient medium (11), and the other, via a needle (8), with the solution (12) to be assayed, the diluent (13) or a standard solution (14) which is to be sampled,

c) a selector (7) for needles (8) which is situated above the said automated device and moves by translation in a horizontal plane, the needles (8) being arranged in a vertical plane parallel to the longitudinal axis of the troughs (2), each needle (8) being vertically movable by excitation of an electromagnet integral with this needle (8) when the latter is selected for the purpose of performing the said sampling,

d) means for withdrawing, with the aid of each needle (8), an amount, which is different for each needle (8), of the solution (12) to be assayed, the standard solution (14) or the diluent (13), and also for withdrawing, after operation of the said valve (10), a constant volume of nutrient medium (11) and for delivering into a test tube the totality of the samples associated with one needle (8),

e) means for effecting in a random manner the distribution of the solutions to be assayed (12) and the standard solutions (14) in the test tubes in the holder (3).

2. Use of an automated preparation device according to Claim 1 for preparing solutions of antibiotics or growth factors, the solutions being intended for microbiological assay by turbidimetry.

3. Use of an automated preparation device according to Claim 1 for preparing mixtures, in proportions which are variable and can be programmed, of different reagents and/or solutions for carrying out enzymatic, chemical, biochemical, immunological or serological assays.

## Patentansprüche

1. Automatischer Apparat für die Durchführung quantitativer mikrobiologischer Analysen von Lösungen (12) durch Trübungsmessung, welcher Apparat umfaßt :

einen Trockeninkubator und ein Trübungsmeßgerät, die mit einem einzigen Computer (18) verbunden sind, der die Abnahme der Daten, die Speicherung der Herstellungsbedingungen für die Lösungen (12) sowie die statistische Auswertung der Meßergebnisse gewährleistet,

einen Herstellungsautomaten für diese Lösungen (12), dessen Steuerung über den Computer (18) erfolgt, welcher Automat seinerseits aufweist :

a) einen horizontalen Tisch (1), der Mulden (2) mit einer Längsachse, die die quantitativ zu analysierenden Lösungen (12), Blindlösungen (14) und ein Verdünnungsmittel (13) enthalten, einen Ständer (3), der eine vorbestimmte Anzahl von Proberohren enthält, und eine Waschstation (4) sowie eine Trockenstation (6) für Entnahmenadeln (8) trägt,

b) eine Gruppe von Verdünnern (5), die jeweils aus einer Kolbenpumpe (9) gebildet sind, deren Ausgang mit einem Weg eines Dreiwegventils (10) verbunden ist, wobei von den beiden anderen Wegen einer mit einer Nährmediumquelle (11) und der andere über eine Nadel (8) mit der zu analysierenden Lösung (12), dem Verdünnungsmittel (13) oder einer Blindlösung (14), die entnommen werden sollen, in Verbindung steht,

c) einen Wähler (7) für die Nadeln (8), der sich oberhalb des Automaten befindet und sich in einer horizontalen Ebene verschieben läßt, wobei die Nadeln (8) in einer vertikalen Ebene angeordnet sind, die parallel zur Längsachse der Mulden (2) verläuft, und jede Nadel (8) vertikal durch Erregung eines mit der Nadel (8) fix verbundenen Elektromagneten bei ihrer Auswahl zur Durchführung der Entnahme bewegbar ist.

d) Mittel, um mit jeder Nadel (8) eine für jede Nadel (8) verschiedene Menge der zu untersuchenden

8

Lösung (12), der Blindlösung (14) oder des Verdünnungsmittels (13) zu entnehmen sowie um nach Steuerung des Ventils (10) ein konstantes Volumen Nährmedium (11) zu entnehmen und um in ein Proberohr die gesamten Entnahmen einer Nadel (8) zu entleeren,

e) Mittel durch Durchführung einer zufälligen Verteilung der zu prüfenden Lösungen (12) und der Blindlösungen (14) auf die Proberohre des Ständers (3).

2. Verwendung eines Herstellungsautomaten nach Anspruch 1 für die Herstellung von Lösungen von Antibiotika oder Wachstumsfaktoren, die für quantitative mikrobiologische Analysen durch Trübungsmessung bestimmt sind.

3. Verwendung eines Herstellungsautomaten nach Anspruch 1 für die Herstellung von Mischungen verschiedener Reagenzien und/oder Lösungen in variablen und programmierbaren Anteilen für die Ausführung von enzymatischen, chemischen, biochemischen, immunologischen oder serologischen quantitativen Analysen.

FIGURE 1

FIGURE 2